# EUROPÄISCHE PATENTANMELDUNG

(11) **EP 2 660 568 A1**
(43) Veröffentlichungstag der Anmeldung: **06.11.2013**
(21) Anmeldenummer: 12166603.6
(22) Anmeldetag: 03.05.2012
(51) Int. Cl.: G01F 23/284, G01S 7/40

(54) **Fehlerkompensation durch Vermessen der STC-Filterfunktion**

(71) Anmelder: VEGA Grieshaber KG, 77709 Wolfach (DE)
(72) Erfinder: Schultheiss, Daniel, 78132 Hornberg (DE)
(74) Vertreter: Maiwald Patentanwalts GmbH

(57) **Zusammenfassung**

Füllstandmessgerät, welches die von eine STC-Filter hervorgerufene Verzerrungen des fangssignals kompensieren kann, indem ein Referenzsignal, welches den und auch as STC-Filter durchläuft, vermessen wird. Dieses Referenzsignal wird nach Durchlaufen des Empfangszweiges einem Mikroprozessor zugeführt, der daraus die Korrekturwerte des ZF-Signals berechnen kann. Es ist ein Schalter vorgesehen, der zwischen dem Referenzsignal und dem ZF-Empfangssignal umschalten kann.

## Beschreibung

### Gebiet der Erfindung

Die Erfindung betrifft die Füllstandmessung. Insbesondere betrifft die Erfindung ein Füllstandmessgerät zur Kompensation eines im Empfangszweig des Füllstandmessgeräts auftretenden Fehlers bei der Bestimmung des Füllstandes und ein Verfahren zur Fehlerkompensation durch Vermessung einer Filterfunktion eines Empfangszweiges eines Füllstandmessgeräts.

### Technologischer Hintergrund

Füllstandmessgeräte, die nach dem Prinzip der frequenzmodulierten kontinuierlichen Wellen (Frequency Modulated Continuous Wave, FMCW) arbeiten, sollten eine rhältnismäßig große Dynamik aufweisen, da alle Echos zum gleichen Zeitpunkt am Empfänger anliegen. Bei den verschiedenen Echos kann es sich beispielsweise um kleine und verhältnismäßig weit entfernte Nutz-Echos sowie verhältnismäßig große Störechos aus dem Nahbereich der Antenne handeln. Diese Störechos können beispielsweise von Anhaftungen in oder an der Antenne, von Einbauten vor der Antenne oder durch eine endliche Entkopplung der Sende-/Empfangsweiche im HF-Modul des Füllstandradars hervorgerufen sein.

Außerdem können Echos im Nahbereich der Antenne in der Regel sehr große Amplituden im Gegensatz zu weiter entfernten Echos mit äußerst geringen Amplituden aufweisen.

Um diese Echos alle in einem Zwischenfrequenz-Kanal (ZF-Kanal) verarbeiten zu können, muss auch hier die ZF-Dynamik z.B. des im Empfangszweig des Füllstand essgerätes vorgesehenen Analog/Digital-Wandlers sehr groß sein.

Eine weit verbreitete Möglichkeit die Dynamik zu komprimieren, also den Dynamikbereich zu verringern, ist die Verwendung einer sogenannten STC-Funktion. "STC" steht hierbei für "Sensitivity Time Control". Die Sec-funktion wird zum Dämpfen der großen Signale im Nahbereich der Antenne verwendet und kann bei einem FMCW-System sehr einfach durch einen Hochpassfilter realisiert werden.

Ein Hochpassfilter kann die Signale mit verhältnismäßig kleinen Frequenzen dämpfen. Da die kleinen Frequenzen einer kleinen Entfernung zur Antenne entsprechen, können hierdurch die störenden, großen Signale im Nahbereich der Antenne gedämpft oder gar vollständig herausgefiltert werden, so dass die Unterschiede in den Amplituden des ZF-Signals verringert werden.

Durch die entfemungsabhängige Dämpfung der Echosignale kann allerdings auch die Kurvenform des Messsignals beeinflusst werden, was wiederum Einfluss auf die Genauigkeit des Sensors im Nahbereich haben kann.

### Aufgabe der Erfindung

Es ist eine Aufgabe der Erfindung, die Messgenauigkeit im Nahbereich der Antenne zu verbessern.

Es sind ein Füllstandmessgerät zur Kompensation eines im Empfangszweig des Füllstandmessgeräts auftretenden Fehlers bei der Bestimmung des Füllstandes sowie ein Verfahren zur Fehlerkompensation im Empfangszweig eines Füllstandmessgeräts durch Vermessung einer Filterfunktion gemäß den Merkmalen der unabhängigen Patentansprüche angegeben. Weiterbildungen der Erfindung ergeben sich aus den Unteransprüchen und der folgenden Beschreibung.

Die im Folgenden beschriebenen Ausführungsbeispiele betreffen gleichermaßen das Füllstandmessgerät und das Verfahren. In anderen Worten sind die im Folgenden im Hinblick auf das Füllstandmessgerät genannten Merkmale auch als Verfahrensschritte in dem Verfahren implementierbar, und umgekehrt.

Gemäß einem ersten Aspekt der Erfindung ist ein Füllstandmessgerät zur Fehlerkompensation eines im Empfangszweig des Füllstandmessgeräts auftretenden Fehlers bei der Bestimmung des Füllstandes angegeben, welches eine Referenzsignalerzeugungseinheit, eine Empfangseinheit, eine Schalteinheit und eine Prozessoreinheit aufweist.

Die Referenzsignalerzeugungseinheit dient der Erzeugung eines Referenzsignals und die Empfangseinheit dient der Aufnahme eines Messsignals, bei welchem es sich um den Anteil des Sendesignals handelt, der am Füllgut oder anderen Gegenständen, wie Behältereinbauten, Behälterboden, Schmutz oder Ablagerungen im Behälter, oder an der Antenne reflektiert wurde. Aus dem aufgenommenen Messsignal wird dann der Füllstand berechnet.

Bevor der Füllstand aus dem Messsignal berechnet wird, wird das Messsignal einer Signalverarbeitung unterworfen, welche z.B. eine Filterung und eine Analog/Digitalwandlung umfassen kann. Auch kann das Messsignal in diesem Zuge in ein Zwischenfrequenzsignal umgewandelt werden. Das ganz oder teilweise verarbeitete Messsignal wird im Folgenden auch Empfangssignal genannt.

Die erste Schalteinheit dient dem Umschalten zwischen dem mit dem Messsignal korrespondierenden Empfangssignal und dem Referenzsignal. Die Prozessoreinheit ist zum Berechnen von Korrekturwerten zum Korrigieren des Empfangssignals unter Verwendung des Referenzsignals ausgeführt.

Bei der Referenzsignalerzeugungseinheit und der Prozessoreinheit kann es sich um dieselben Einheiten handeln (das Referenzsignal kann also von der Prozessoreinheit erzeugt werden). Es können aber auch verschiedene Einheiten oder zumindest teilweise verschiedene Einheiten sein. Beispielsweise kann die Prozessoreinheit ein gesondertes Bauteil ansteuern, welches das Referenzsignal auf Anweisung der Prozessoreinheit erzeugt.

Das mit dem Messsignal korrespondierende Empfangssignal kann insbesondere ein Zwischenfrequenzsignal (ZF-Signal) sein, welches aus dem Messsignal erzeugt wurde. Hierfür kann ein sogenanntes FMCW-Frontend, im Folgenden auch FMCW-Modul genannt, vorgesehen sein, welches das Messsignal von der Empfangseinheit (Antenne) entgegennimmt und in das Zwischenfrequenzsignal umwandelt. Dieses FMCW-Modul kann darüber hinaus zur Sendesignalerzeugung ausgeführt sein.

Weiter kann die Schalteinheit mit dem FMCW-Modul verbunden sein, so dass das Zwischenfrequenzsignal der Schalteinheit direkt vom FMCW-Modul zugeführt wird.

Die Schalteinheit kann nun wahlweise das Zwischenfrequenzsignal oder das Referenzsignal an die daran geschlossenen Bauelemente des Empfangszweiges weitergeben.

Gemäß einer Ausführungsform der Erfindung ist die Prozessoreinheit zur Korrektur von mit einer entfernungsabhängigen Dämpfung zusammenhängenden Distanziehiem des Empfangssignals ausgeführt. Diese Distanzfehler können sich beispielsweise aus einem nicht linearen Temperaturverhalten des Empfangszweiges und insbesondere des STC-Filters ergeben. Es ist aber auch möglich, dass die Prozessoreinheit andere Fehler des Empfangssignals korrigiert, welche durch die Verarbeitung des Messsignals im Empfangszweig hervorgerufen werden.

Gemäß einer weiteren Ausführungsform der Erfindung ist die Referenzsignalerzeugungseinheit ein Mikroprozessor. Insbesondere kann sie mit der oben beschriebenen Prozessoreinheit identisch sein. Auch kann ein eigener Mikroprozessor vorgesehen sein.

Gemäß einer weiteren Ausführungsform der Erfindung weist die eferenzsignalerzeugungseinheit einen spannungsgesteuerten Oszillator (Voltage Controlled Oscillator, VCO), eine Phasenregelschleife (Phase Locked Loop, PLL) oder einen direkten digitalen Synthetisierer (Direct Digital Synthesis-Device, DDS) auf.

Dieses Bauteil kann von der Prozessoreinheit gesteuert werden und erzeugt das Referenzsignal.

Gemäß einer weiteren Ausführungsform der Erfindung wird die Frequenz des Referenzsignals durchgefahren ("durchgesweept"), um eine Referenz-Filterkurve des Empfangszweiges des Füllstandmessgeräts aufzunehmen, welche dann zur Berechnung der Korrekturwerte verwendet wird.

Beispielsweise wird die Frequenz von 0 Hz bis zur höchsten auftretenden ZF-Frequenz durchgefahren. Auch ist es möglich, dass das Referenzsignal von 0 Hz bis zu einer Frequenz durchgefahren wird, welche geringer ist als die höchste auftretende ZF-Frequenz, Auch kann vorgesehen sein, dass das Referenzsignal von einer einstellbaren Startfrequenz (ungleich Null) bis zu einer ebenfalls einstellbaren Höchstfrequenz durchgefahren wird.

Gemäß einer weiteren Ausführungsform der Erfindung erfolgt die Berechnung der Korrekturwerte während des Betriebs des Füllstandmessgeräts. Auch kann vorgesehen sein, dass die Berechnung der Korrekturwerte einmalig beim Abgleich des Sensors, also beispielsweise bei Inbetriebnahme, erfolgt.

Findet die Berechnung der Korrekturwerte während des Betriebs des Füllstandmessgeräts statt, so kann diese beispielsweise in Abhängigkeit von der aktuellen Temperatur und/oder beispielsweise alle 10 bis 100 Messungen und/oder beispielsweise einmal pro Stunde erfolgen. Soll die Berechnung der Korrekturwerte in Abhängigkeit von der Temperatur erfolgen, sind hierfür ein oder mehrere Temperaturmesssensoren vorgesehen, die starke Temperaturänderungen im Füllstandmessgerät detektiert und dann ggf. eine neue Berechnung der Korrekturwerte durch Erzeugen des Referenzsignals und Umlegen der ersten Schalteinheit triggern.

Gemäß einer weiteren Ausführungsform der Erfindung ist ein Analog/DigitalWandler im Empfangszweig vorgesehen. Auch ist eine zweite Schalteinheit vorgesehen, welche das Referenzsignal direkt in den Analog/Digital-Wandler einspeisen kann.

Auf diese Weise kann das Referenzsignal unter Umgehung der zwischen dem A/D-Wandler und der Antenne im Empfangszweig angeordneten Bauelemente vermessen werden. Dies ist beispielsweise dann vorteilhaft, wenn die Form des Referenzsignals nicht oder nur unzureichend bekannt ist.

Bei den zwei Schalteinheiten kann es sich beispielsweise um integrierte Analogschalter, beispielsweise in Form von Transistoren, um integrierte Schaltkreise oder Relais handeln.

Gemäß einer weiteren Ausführungsform der Erfindung ist das Füllstandmessgerät ein FMCW-Radarsystem.

Gemäß einem weiteren Aspekt der Erfindung ist ein Verfahren zur Fehlerkompensation im Empfangszweig eines Füllstandmessgeräts durch Vermessung einer Filterfunktion des Empfangszweiges angegeben, bei dem ein Referenzsignal erzeugt wird und ein Messsignal aufgenommen wird. Im Empfangszweig kann dann zwischen einem mit dem Messsignal korrespondierenden Empfangssignal und dem Referenzsignal umgeschaltet werden und es können auf diese Weise Korrekturwerte zum Korrigieren des Empfangssignals unter Verwendung des Referenzsignals berechnet werden.

Gemäß einer weiteren Ausführungsform der Erfindung wird der Frequenzbereich des durchgefahren, um eine Referenz-Filterkurve des Empfangszweiges des Füllstandmessgeräts aufzunehmen, welche zur Berechnung der Korrekturwerte verwendet wird.

Gemäß einer weiteren Ausführungsform der Erfindung wird das Referenzsignal durch direktes Einspeisen des Referenzsignals in einen Analog/Digital-Wandler vermessen.

Im Folgenden werden mit Verweis auf die Figuren Ausführungsbeispiele der Erfindung beschrieben.

Kurze Beschreibung der Figuren
Fig. 1 zeigt den Schaltkreis eines Füllstandmessgeräts gemäß einem ersten Ausführungsbeispiel der Erfindung,
Fig. 2 zeigt den Schaltkreis eines Füllstandmessgeräts gemäß einem weiteren Ausführungsbeispiel der Erfindung.
Fig. 3 zeigt den Schaltkreis eines Füllstandmessgeräts gemäß einem weiteren Ausführungsbeispiel der Erfindung.
Fig. 4 zeigt ein Flussdiagramm eines Verfahrens gemäß einem Ausführungsbeispiel der Erfindung.
Fig. 5 zeigt ein Füllstandmesssystem gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

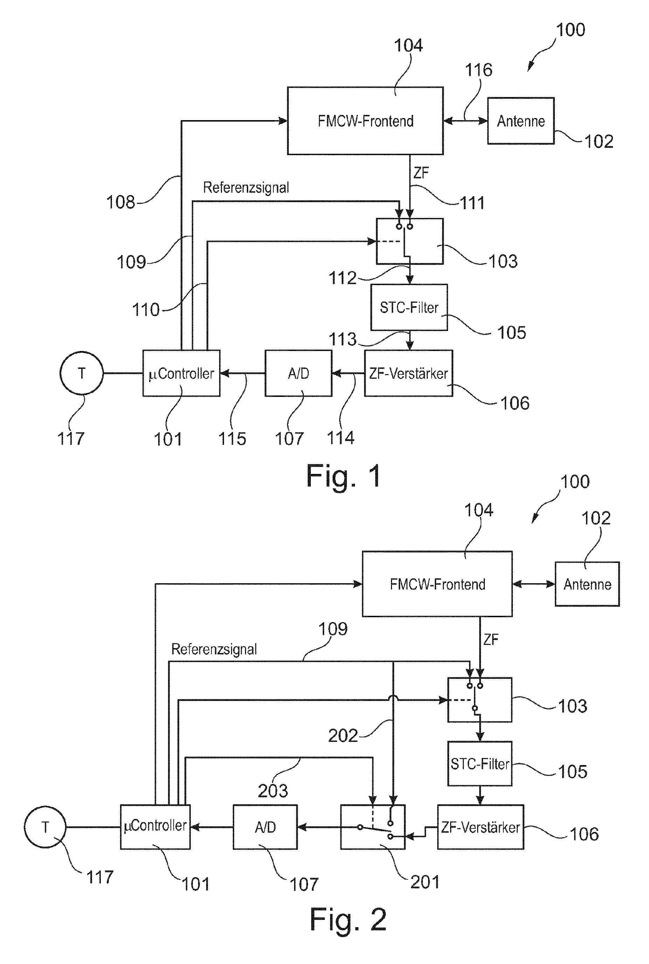

Fig. 1 zeigt ein Füllstandmessgerät 100, welches eine Referenzerzeugungseinheit 101, eine Empfangseinheit 102, eine erste Schalteinheit 103 und eine Prozessoreinheit 101 aufweist, welche in diesem Ausführungsbeispiel mit der Referenzerzeugungseinheit identisch ist.

Die Prozessoreinheit 101, beispielsweise ein Mikroprozessor, steuert die unterschiedlichen Bauteile und ist über den ersten Signalpfad 108 an das FMCW-Frontend 104 angeschlossen. In diesem FMCW-Frontend 104 wird das Sendesignal erzeugt, welches dann über die bidirektionale Leitung 116 an die Antenne 102 weitergegeben wird. Die Antenne nimmt dann das reflektierte Messsignal entgegen und leitet es über die bidirektionale Verbindung 116 zurück an das FMCW-Frontend 104. Dort wird das Messsignal in ein ZF-Empfangssignal umgewandelt und über die Signalleitung 111 an die erste Schalteinheit 103 übergeben.

Die Prozessoreinheit 101 ist auch in der Lage, als eferenzsignalerzeugungseinheit zu dienen und erzeugt nach Bedarf ein Referenzsignal, welches über die Datenleitung 109 ebenfalls an die erste Schalteinheit 103 übergeben wird. Weiter steuert die Prozessoreinheit 101 über die Datenleitung 110 die erste Schalteinheit 103, so dass diese Schalteinheit zwischen dem Referenzsignal und dem ZF-Empfangssignal umschalten kann.

Das Referenzsignal oder wahlweise das ZF-Empfangssignal wird dann von der ersten Schalteinheit 103 an den STC-Filter 105 über die Signalleitung 112 übergeben. Der STC-Filter führt dann beispielsweise eine Hochpassfilterung durch, um die hohen Amplituden bei kleinen Frequenzen (welche auf störende Effekte im Nahbereich der Antenne zurückzuführen sind) zu dämpfen.

Das gefilterte Signal wird dann vom STC-Filter über die Signalleitung 113 an den ZF-Verstärker 106 übergeben, der es verstärkt. Das verstärkte Signal wird dann von dem ZF-Verstärker 106 über die Datenleitung 114 an den Analog/Digital-Wandler 107 übergeben, der das Signal digitalisiert und es dann über die Signalleitung 115 an die Prozessoreinheit 101 übergibt, welche daraufhin aus diesem Signal den Füllstand bestimmen kann.

Auch kann die Prozessoreinheit 101 die Korrekturwerte zur Korrektur des Empfangssignals berechnen, indem ihr das Referenzsignal zugeführt wird, nachdem es den Schalter 103, den STC-Filter 105, den ZF-Verstärker 106 und den Analog/Digital-Wandler 107, also den gesamten ZF-Zweig, durchlaufen hat.

In anderen Worten ist im ZF-Zweig des Empfängers ein Umschalter 103 eingebaut, der es ermöglicht, zwischen dem Messsignal und dem Referenzsignal hin- und herzuschalten. Das Referenzsignal wird dazu benutzt, die Kennlinie des STC-Filters bzw. des gesamten ZF-Zweigs zu charakterisieren. Daraus lassen sich Korrekturwerte errechnen, mit denen die ZF-Abtastwerte korrigiert werden können. Damit lässt sich der durch die entfemungsabhängige Dämpfung entstandene Distanzfehler kompensieren. Die weitere Signalbearbeitung kann wie gewohnt erfolgen.

Es kann als ein Kernaspekt der Erfindung angesehen werden, dass die Messgenauigkeit des Füllstandmessgeräts insbesondere im Nahbereich der Antenne verbessert wird, indem die STC-Filterkurve bzw. der Frequenzgang des kompletten ZF-Zweiges des Füllstandmessgeräts korrigiert wird. Dies erfolgt, indem die Antenne und das FMCW-Frontend vom Empfangszweig weggeschaltet (abgeklemmt) wird und gleichzeitig ein Referenzsignal dem Empfangszweig zugeschaltet wird. Dieses Referenzsignal durchläuft den Empfangszweig und insbesondere den STC-Filter und wird nach Durchlaufen zur Korrektur des Empfangssignals eingesetzt. Letztendlich handelt es sich also um eine Art Eichung, die während des laufenden Betriebs des Füllstandmessgeräts durchgeführt werden kann.

In die ZF-Kette (also der Empfangszweig) ist nach dem Mischer (nicht dargestellt in den Figuren) des FMCW-Frontends 104 ein Umschalter ("erste Schaltereinheit") 103 angeordnet, mit dem zwischen dem ZF-Empfangssignal und dem z.B. durch die Prozessoreinheit 101 erzeugten Referenzsignal umgeschaltet werden kann.

Das Referenzsignal wird dabei von 0 Hz bis maximal zur höchsten auftretenden ZF-Frequenz durchgefahren und die Filterkurve (mit Dämpfung und Phasengang) der gesamten ZF-Kette aufgezeichnet. Die Aufzeichnung erfolgt beispielsweise durch die Prozessoreinheit 101 oder eine daran angeschlossene Speichereinheit (nicht dargestellt).

Aus diesen Daten kann dann eine inverse Filterfunktion berechnet werden und mit dieser können die Abtastwerte des Zwischenfrequenzsignals korrigiert werden.

Die Distanzauswertung kann dann anschließend auf der so korrigierten ZF-Kurve erfolgen.

Die Vermessung der Filterkurve (also des Referenzsignals) kann entweder regelmäßig während des Betriebs des Füllstandmessgeräts oder einmalig beim Abgleich des Füllstandmessgeräts erfolgen. Ein Vorteil der Vermessung der Filterkurve während des Betriebs des Füllstandmessgeräts besteht darin, dass in diesem Fall Temperaturabhängigkeiten erfasst werden können. Hierfür sind ein oder mehrere Temperatursensoren 117 vorgesehen, die ebenfalls an die Prozessoreinheit 101 geschlossen sind.

Fig. 2 zeigt ein Füllstandmessgerät, welches zusätzlich zu den Bauteilen, die das Messgerät der Fig. 1 aufweist, die Messung des Referenzsignals ohne ZF-Zweig ermöglicht. Hierfür ist eine zweite Schalteinheit 201 vorgesehen, welche zwischen dem ZF-Verstärker 106 und dem Analog/Digital-Wandler 107 angeordnet ist. Diese Schalteinheit wird über die Steuersignalleitung 203 von der Prozessoreinheit 101 gesteuert und kann zwischen den Bauteilen des Empfangszweiges (STC-Filter 105, ZF-Verstärker 106) und dem Referenzsignal von der Prozessoreinheit 101 hin-und herschalten. Hierfür ist der Frequenzsignalzweig 109 nicht nur mit der ersten Schalteinheit 103, sondern auch über die Leitung 202 mit der zweiten Schalteinheit 201 verbunden.

Wenn beispielsweise das Referenzsignal nicht genau bekannt ist, kann es auf diese Weise direkt vermessen werden.

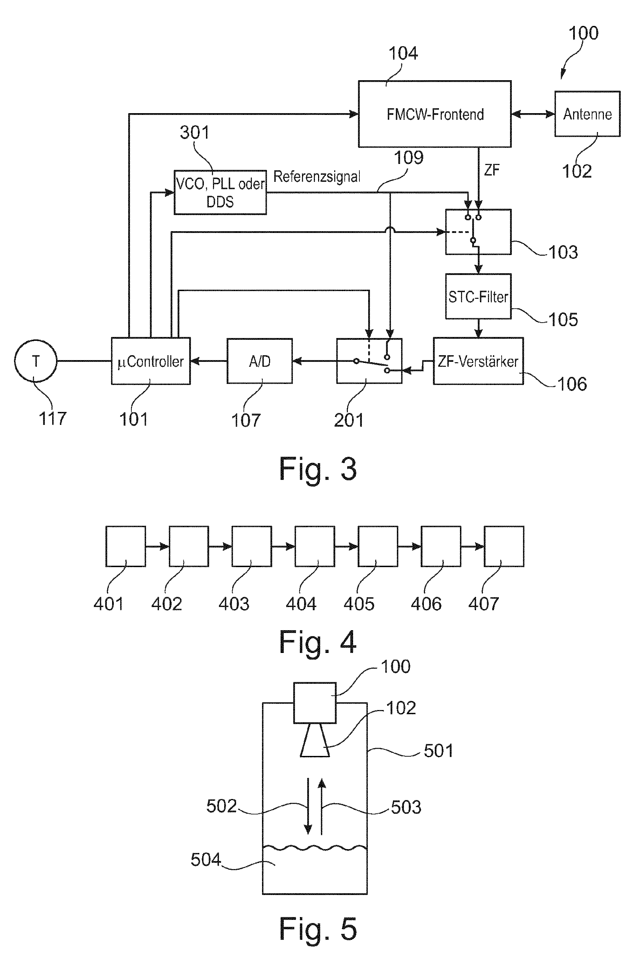

Das Referenzsignal kann, wie in Fig. 3 gezeigt, auch aus einer anderen Quelle stammen. Hierbei kann es sich beispielsweise um einen VCO, einen DDS oder PLL 301 handeln. Je nach Qualität des Referenzsignals kann dieses zusätzlich, ohne die ZF-Kette, direkt am Analog/Digital-Wandler 107 zur Charakterisierung eingespeist werden. Hierzu wird ein weiterer Umschalter 201 zwischen dem A/D-Wandler und dem ZF-Verstärker 106 benötigt. Die Steuerung der ersten und der zweiten Schalteinheit 103, 201 übernimmt die Prozessoreinheit 101.

Fig. 4 zeigt ein Flussdiagramm eines Verfahrens gemäß einem Ausführungsbeispiel der Erfindung. Im Schritt 401 wird ein Sendesignal im Füllstandmessgerät erzeugt und über die Antenne in Richtung Füllgut ausgesendet. Im Schritt 402 wird das entsprechende Messsignal aufgenommen und in ein Zwischenfrequenzsignal umgewandelt. Im Schritt 403 erfolgt die Erzeugung eines Referenzsignals, welches in der Frequenz durchgefahren wird und im Schritt 404 wird im Empfangszweig von dem ZF-Empfangssignal zum Referenzsignal umgeschaltet, welches daraufhin den ZF-Zweig durchläuft und im Schritt 405 von einer Prozessoreinheit aufgenommen wird. Aus diesem Referenzsignal werden im Schritt 406 Korrekturwerte berechnet, mit denen im Schritt 407 das Empfangssignal korrigiert wird. Hierfür kann der Schalter wieder zurückgeschaltet werden, so dass neue Messsignale den ZF-Zweig durchlaufen können, welche anschließend im Mikroprozessor korrigiert werden.

Fig. 5 zeigt ein Füllstandmesssystem mit einem Behälter 501, der ein Füllmedium 504 aufweist. An der Oberseite des Behälters ist ein Füllstandmessgerät 100 angebracht, welches ein Sendesignal 502 in Richtung Füllgutoberfläche aussendet. Das reflektierte Messsignal 503 wird dann von der Sende-/Empfangsantenne 102 aufgenommen und dem FMCW-Frontend zugeführt.

Die weitere Signalverarbeitung erfolgt wie oben beschrieben.

Ergänzend sei darauf hingewiesen, dass "umfassend" und "aufweisend" keine anderen Elemente oder Schritte ausschließt und "eine" oder "ein" Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, Bezugszeichen in den Ansprüchen sind nicht als Einschränkung anzusehen,

## Patentansprüche

1. Füllstandradar zur Kompensation eines im Empfangszweig des Füllstandmessgeräts auftretenden Fehlers bei der Bestimmung des Füllstandes, aufweisend:
eine Referenzsignalerzeugungseinheit (101) zur Erzeugung eines Referenzsignals;
eine Empfangseinheit (102) zur Aufnahme eines Messsignals;
eine erste Schalteinheit (103) zum Umschalten zwischen einem mit dem Messsignal korrespondierenden Empfangssignal und dem Referenzsignal;
eine Prozessoreinheit (101) zum Berechnen von Korrekturwerten zum Korrigieren des Empfangssignals unter Verwendung des Referenzsignals.

2. Füllstandradar nach Anspruch 1,
wobei die Prozessoreinheit (101) zur Korrektur von mit einer entfemungsabhängigen Dämpfung zusammenhängenden Distanzfehtern des Empfangssignals ausgeführt ist.

3. Füllstandradar nach einem der vorhergehenden Ansprüche,
wobei das Füllstandmessgerät (100) ein FMCW-Modul (104) aufweist, welches das Messsignal in ein Zwischenfrequenzsignal umwandelt;
wobei die Schalteinheit (103) mit dem FMCW-Modul (104) verbunden ist, so dass das Zwischenfrequenzsignal der Schalteinheit (103) zugeführt wird.

4. Füllstandradar nach einem der vorhergehenden Ansprüche,
wobei die Referenzsignalerzeugungseinheit (101) ein Mikroprozessor ist.

5. Füllstandradar nach einem der Ansprüche 1 bis 3,
wobei die Referenzsignalerzeugungseinheit (101) einen spannungsgesteuerten Oszillator (VCO), eine Phasenregelschleife (PLL) oder einen direkten digitalen Synthetisierer (DDS) aufweist.

6. Füllstandradar nach einem der vorhergehenden Ansprüche,
wobei die Frequenz des Referenzsignals durchgefahren wird, um eine Referenz-Filterkurve des Empfangszweigs des Füllstandmessgeräts aufzunehmen, welche zur Berechnung der Korrekturwerte verwendet wird.

7. Füllstandradar nach einem der vorhergehenden Ansprüche,
wobei die Berechnung der Korrekturwerte während des Betriebs des Füllstandmessgeräts erfolgt.

8. Füllstandradar nach einem der vorhergehenden Ansprüche, weiterhin aufweisend:
einen A/D-Wandler (107) im Empfangszweig;
eine zweite Schalteinheit (201) zum direkten Einspeisen des Referenzsignals in den A/D-Wandler (107).

9. Verfahren zur Fehlerkompensation im Empfangszweig eines Füllstandmessgeräts (100) durch Vermessung einer Filterfunktion des Empfangszweiges, aufweisend die folgenden Schritte:
Erzeugen eines Referenzsignals;
Aufnehmen eines Messsignals;
Umschalten, im Empfangszweig, zwischen einem mit dem Messsignal korrespondierenden Empfangssignal und dem Referenzsignal;
Berechnen von Korrekturwerten zum Korrigieren des Empfangssignals unter Verwendung des Referenzsignals.

10. Verfahren nach Anspruch 9, weiter aufweisend den Schritt:
Durchfahren der Frequenz des Referenzsignals, um eine Referenz-Filterkurve des Empfangszweigs des Füllstandmessgeräts aufzunehmen, welche zur Berechnung der Korrekturwerte verwendet wird.

11. Verfahren nach Anspruch 9 oder 10, weiter aufweisend den Schritt:
Verinessen des Referenzsignals durch direktes Einspeisen des Referenzsignals in einen A/D-Wandler (107).

## Geänderte Patentansprüche

### Geänderte Patentansprüche gemäss Regel 137(2) EPÜ.

**1.** Füllstandradar zur Kompensation eines im Empfangszweig des Füllstandmessgeräts auftretenden Fehlers bei der Bestimmung des Füllstandes, aufweisend:
eine Referenzsignalerzeugungseinheit (101) zur Erzeugung eines Referenzsignals;
eine Empfangseinheit (102) zur Aufnahme eines Messsignals;
ein FMCW-Modul (104) zum Umwandeln des Messsignals in ein Zwischenfrequenzsignal;
eine erste Schalteinheit (103) zum Umschalten zwischen dem mit dem Messsignal korrespondierenden Zwischenfrequenzsignal und dem Referenzsignal, wobei die Schalteinheit (103) mit dem FMCW-Modul (104) verbunden ist, so dass das Zwischenfrequenzsignal der Schalteinheit (103) zugeführt wird;
eine Prozessoreinheit (101) zum Berechnen von Korrekturwerten zum Korrigieren des Zwischenfrequenzsignals unter Verwendung des Referenzsignals.

**2.** Füllstandradar nach Anspruch 1,
wobei die Prozessoreinheit (101) zur Korrektur von mit einer entfernungsabhängigen Dämpfung zusammenhängenden Distanzfehlern des Zwischenfrequenzsignals ausgeführt ist.

**3.** Füllstandradar nach einem der vorhergehenden Ansprüche,
wobei die Referenzsignalerzeugungseinheit (101) ein Mikroprozessor ist.

**4.** Füllstandradar nach einem der Ansprüche 1 bis 3,
wobei die Referenzsignalerzeugungseinheit (101) einen spannungsgesteuerten Oszillator (VCO), eine Phasenregelschleife (PLL) oder einen direkten digitalen Synthetisierer (DDS) aufweist.

**5.** Füllstandradar nach einem der vorhergehenden Ansprüche,
ausgeführt zum Durchfahren der Frequenz des Referenzsignals, um eine Referenz-Filterkurve des Empfangszweigs des Füllstandmessgeräts aufzunehmen, welche zur Berechnung der Korrekturwerte verwendet wird.

**6.** Füllstandradar nach einem der vorhergehenden Ansprüche,
ausgeführt zur Berechnung der Korrekturwerte während des Betriebs des Füllstandmessgeräts.

**7.** Füllstandradar nach einem der vorhergehenden Ansprüche, weiterhin aufweisend:
einen A/D-Wandler (107) im Empfangszweig;
eine zweite Schalteinheit (201) zum direkten Einspeisen des Referenzsignals in den A/D-Wandler (107).

**8.** Verfahren zur Fehlerkompensation im Empfangszweig eines Füllstandmessgeräts (100) durch Vermessung einer Filterfunktion des Empfangszweiges, aufweisend die folgenden Schritte:
Erzeugen eines Referenzsignals;
Aufnehmen eines Messsignals;
Umwandeln des Messsignals in ein Zwischenfrequenzsignal;
Umschalten, im Empfangszweig, zwischen einem mit dem Messsignal korrespondierenden Zwischenfrequenzsignal und dem Referenzsignal;
Berechnen von Korrekturwerten zum Korrigieren des Zwischenfrequenzsignals unter Verwendung des Referenzsignals.

**9.** Verfahren nach Anspruch 8, weiter aufweisend den Schritt:
Durchfahren der Frequenz des Referenzsignals, um eine Referenz-Filterkurve des Empfangszweigs des Füllstandmessgeräts aufzunehmen, welche zur Berechnung der Korrekturwerte verwendet wird.

**10.** Verfahren nach Anspruch 8 oder 9, weiter aufweisend den Schritt:
Vermessen des Referenzsignals durch direktes Einspeisen des Referenzsignals in einen A/D-Wandler (107).
